# EUROPEAN PATENT APPLICATION

(11) **EP 1 431 029 A1**
(43) Date of publication of application: **23.06.2004**
(21) Application number: 02765565.3
(22) Date of filing: 17.09.2002
(51) Int. Cl.: B32B 27/32, B65D 65/40

(54) **PACKAGING MATERIAL FOR CONTAINER BEING EASY TO OPEN**

(30) Priority: 20.09.2001 JP 2001286628
(71) Applicant: Tetra Laval Holdings & Finance S.A., 1009 Pully (CH)
(72) Inventor: IKENOYA, Tadakatsu, Tokyo 102-8544 (JP)
(74) Representative: Müller, Frank Peter, Dipl.-Ing.
(86) International application number: PCT/JP2002/009487
(87) International publication number: WO 2003/026889

(57) **Abstract**

The packaging material comprising of laminates includes a core material of paper or polyolefin including inorganic filler. An innermost layer of the packaging material comprises linear low-density polyethylene produced by using metallocene catalyst and fine inorganic filler. The fine inorganic filler is fine phyllosilicate dispersing in the polyethylene uniformly. 0.1-10 % by weight of the phyllosilicate having average particle diameter in a range of 1-80 micron and no particle size of more than 300 micron is contained in the polyethylene, the phyllosilicate is substantially dispersed uniformly in the interlayer distance of 50 Angstrom or more.

The packaging materials have superior sealability and superior strength, as well as good openability.

## Description

### TECHNICAL FIELD

This invention relates to a packaging material for an easily openable container, particularly a packaging material for a container having superior sealability, good strength and easy openability in detail more.

### BACKGROUND ART

For various kinds of packing materials, paper and polyolefin including inorganic filler are used as a core material conventionally. To protect the core material and the filled contents, a lamination material comprising the core material and plastic films such as polyethylene, polypropylene, polyester, polyvinylchloride and etc is used.

A method to break the perforation of the contents-filled container formed by the laminate packaging materials is known as an opening method to take out the contents from the container.

The film of linear low-density polyethylene (hereinafter referred as the "mLLDPE") produced by using metallocene catalyst with the superior seal characteristics and superior strength is used for the innermost layer contacting with the contents packed with the packaging material and taken out with the opening method.

The container formed from the packaging material having the mLLDPE film, however, has a defect that is inferior to an openability. In case the thin mLLDPE film is used, the openability improves but the strength in practical use deteriorates.

### DISCLOSURE OF THE INVENTION

The purpose of this invention is to provide with packaging materials comprising of laminates with an innermost layer of the linear low-density polyethylene produced by using metallocene catalyst having superior seal characteristics, superior strength and a good openability.

As a result of study to improve the above-mentioned problems, the inventor found an innermost layer of a laminate packaging material containing the linear low-density polyethylene produced by using metallocene catalyst and fine inorganic fillers, and invention was finished.

The subject matter of the invention resides in packaging materials characterized by that an innermost layer of a laminate packaging material with a core material of paper or polyolefin including inorganic filler comprises linear low-density polyethylene produced by using metallocene catalyst and fine inorganic fillers.

In preferable embodiment in this invention, the fine inorganic filler is characterized by comprising one or more than one filler chosen by calcium carbonate, clay and zeolite.

In preferable embodiment in this invention, the clay is characterized by being chosen from kaolinite, montmorillonite and mica.

In preferable embodiment in this invention, the fine inorganic filler is phyllosilicate which is substantially dispersed in uniformity in the polyethylene.

The phyllosilicate is substantially dispersed uniformly in the interlayer distance of 50 Angstrom or more.

### Best Mode for Carrying out the Invention

Paper of the core material of the packaging materials of this invention is normal paper type having weight of 50-350 g/m².

The polyolefin layer including inorganic filler of core materials of packaging materials of this invention is mentioned in the patent specification, for example, JP B 2848635.

The polyolefin includes polyethylene, polypropylene, polybutene-1, as mentioned in the patent specification. Polypropylene is particularly preferable.

The polypropylene includes homopolymer of propylene, propylene-ethylene copolymer. Polypropylene with melt flow rate (MFR) of 0.5-5g /10min. (ASTM D1238; 2.16kg, 230 degrees Celsius) is particularly suitable. The inorganic filler includes mica, talc and calcium salts such as calcium sulfate and, calcium carbonate. The content is about 50-80 % by weight.

The thickness of the polyolefin layer including inorganic filler is 100-400 µm and the thickness of each layer is preferably 50-200 µm. The laminate with preferable thickness of 120-180 µm may be used. The inorganic fillers of the two layers are the same filler or, are preferably the heterogonous fillers.

In addition, in the case of the laminate, the formed layer having the same thickness or less than thickness can be used in an interlayer of the layers. The laminate comprising of two layers structure and the laminate having the interlayer are preferably produced by simultaneous extrusion method.

The innermost layer of the packaging materials of this invention consists of mLLDPE and the fine inorganic filler.

In addition, a layer on the side contacting the contents is referred to the inner layer, when the packaging materials are used and the contents is packed with the packaging materials, in the packaging material of this invention. A layer on the other side is referred to the outer layer.

Narrow molecular weight distribution of mLLDPE is 2-4 in ratio of weight average molecular weight / number average molecular weigh. Preferable density are 0.900-0.925 g / cm³, more preferable density is 0.900-0.915g /cm³. Preferable melt flow index (MFI: 190 degrees Celsius, load 2.16kg) is 10-20 g/10 min.

The mLLDPE is preferably produced by copolymerization between ethylene and comonomer of alpha-olefin having 4-8 carbons, preferable alpha olefin having over 6 carbons, e.g. 1-hexene, 4-methyl-1-pentene, 1-heptene, 1-octene and etc, using the metallocene catalyst.

The above metallocene catalyst is a compound of metallocene compound of the sandwiched structure of transition metal such as titanium, zirconium, hafnium with an unsaturated cyclic compound containing pi-electron cyclo-pentadienyl group or substituted cyclopentadienyl group and, a cocatalyst of aluminum compound such as alkyl alminoxane, alkyl aluminum, aluminum halide and alkyl aluminum halide

The fine inorganic filler includes one or no less than 2 fillers chosen from calcium carbonate, clay and zeolite. Kaolinite and montmorillonite are particularly preferable. Zeolite may include natural zeolite and synthetic zeolite.

The inorganic filler includes preferable calcium carbonate having the average particle diameter of 1-5 µm, preferable clay having the average particle diameter of less than 1µm, preferably 1-900nm and particularly 100-800 nm, and preferable zeolite having the average particle diameter of 1-5 µm.

The content of the filler is 1-50 weight %, preferably 5-20 weight %. Preferable thickness of the innermost layer comprising of mLLDPE and the fine inorganic filler may be 5-30 µm.

The packaging materials of this invention have the above-mentioned core material and the above-mentioned innermost layer. In the packaging materials of this invention, one or plural other layers can be arranged between the core material and the innermost layer. The other layer can include the thermoplastic resin layer, the barrier layer, adhesive layer and etc. The thermoplastic resin includes polyolefin, polyamide, polyester, polyvinylchloride and etc. The polyolefin includes polyethylene, polypropylene, ethylene-propylene rubber, polybutene-1 and etc. The polyamide includes polyamide 6, polyamide 6-6, polyamide -11, polyamide -12 and etc. The polyester includes polyethylene terephthalate, polybutylene terephthalate and etc. The polyolefin is particularly preferable. The polyethylene includes high density polyethylene, middie density polyethylene, low density polyethylene, linear low-density polyethylene, mLLDPE and etc., optionally. The thermoplastic resin layer has one or plural layers. In case of the plural layers, the thermoplastic resin layers are the same or heterogonous layers.

The barrier layer includes barrier-related material or, multilayered structural material including barrier-related material. The barrier-related material includes aluminum foil, silicon oxide vapor deposited polyethylene phthalate, ethylene - vinyl alcohol copolymer, polyamide resin and etc. The multilayered structure including the barrier-related material includes polyethylene film / aluminum foil, adhesive polyethylene / biaxial stretching film of silicon oxide vapor deposition polyethylene terephthalate (/ glue), polyethylene film / adhesive / ethylene - vinyl alcohol copolymer film / adhesive, polyamide resin film / adhesive and etc. The adhesive layer includes, for example, acrylic resin glue, modified polyolefin glue, ethylene - vinyl acetate copolymer, polyamide adhesive, epoxide resin adhesive and etc. The acrylic resin adhesive includes polymers of acrylic acid or methacrylic acid or their alkyl ester, copolymer thereof and etc. The modified polyolefin adhesive is obtained by graft polymerization to polyethylene, polypropylene with unsaturated carboxylic acid of itaconic acid, acrylic acid, methacrylic acid, maleic acid, maleic anhydride, fumaric acid or the anhydride, in in the presence of organic peroxide.

The thickness of the other layer arranged between the core material and the innermost layer is usually 5-200 µm in case of the thermoplastic resin layer, usually 5-25 µm in case of the barrier layer, usually 5-30 µm in case of the adhesive layer.

The packaging materials of this invention can have one or plural other layers on the outside of the core material. The preferable other layer is thermoplastic resin layer. The thermoplastic resin is chosen among the above-mentioned thermoplastic resin, e.g. polyolefin, particularly desirable polyethylene. The polyethylene includes high density polyethylene, middle density polyethylene, low density polyethylene, linear low-density polyethylene, mLLDPE, preferably low density polyethylene and linear low-density polyethylene. The thickness of the thermoplastic resin layer is usually 5-200 µ m.

In preferable embodiment of this invention, the above fine inorganic filler is the fine phyllosilicate which substantially uniformly disperses in the above polyethylene. Preferably, the average particle diameter is in a range of 1-80 micron. The phyllosilicate which does not include particle size more than 300 micron is contained with 0.1-10 % by weight, into the polyethylene, The phyllosilicate is dispersed by the interlayer-distance of more than 50 Angstrom, substantially and uniformly.

For example, raw materials of phyllosilicate include a layered phyllosilicate mineral consisting of layers of magnesium silicate or aluminum silicate. The raw materials include kaolinite, halloysite, chrysotile, montmorillonite, hectorite, fluorine hectorite, smectite, vermiculite, muscovite, micas, fluorine muscovite, swelling synthetic mica, swelling synthesis fluorine mica, margarite, pyrophyllite, talc, chlorite. From the viewpoint of surface appearance, product coloration and gas barrier, montmorillonite, hectorite, fluorine hectorite and, swelling characteristics synthesis fluorine mica are desirable.

The phyllosilicate (clay mineral) which has, between layers, a metal ion (for example, metal ion chosen from Ag, Zn, Co, Cd, and Cu, except Na, K, Li, and calcium) or its metal compound in the preferable embodiment of this invention can be used. The phyllosillcate has outstanding antibacterial to various microbes, such as a pseudomonas aeruginosa, coliform bacillus, and yellow staphylococcus. Therefore, antibacterial performance is also given to the packaging laminated material containing the phyllosilicate.

A blending amount of phyllosilicate selection can be changed appropriately under consideration to improvement effect such as oxygen barrier, durability for stress, off- taste and quality keeping for polyolefin.

In the method to disperse phyllosilicate into polyethylene uniformly, first of all, for easily fine lamination and dispersion, natural or synthetic phyllosilicate material with easily aqua swelling is chosen and is prepared. The phyllosilicate raw materials are swelled with minimum amount of water. The water amount is amount for easy delamination in later kneading step. The raw materials swelled with water and polyolefin are filled into an extruder (preferable bi-axis extruder) and are kneaded under a kneading condition (temperature, degree of vacuum) to prevent moisture foam, with exfoliation of the phyllosilicate. The resin composition containing fine phyllosilicate uniformly dispersing in polyolefin by the kneading step is obtained.

The packaging materials of this invention are laminates. As the lamination method, any method of a method by using adhesive, a method with thermofusion layer, a method of laminating by using simultaneous extrusion, a method of combination thereof and a conventional method of producing the laminates can be accepted.

A brick shape container, a gable-top container for milk and etc, a cylinder type container, a prism shape container, a pouch shape container and conventional container have usual shape can be formed from the packaging materials of this invention.

### Example

This invention is described by Examples in detail as follows

### (Example 1)

90 weight part of mLLDPE having MFI: 16g /10 minute, SR1.5 and high melting temperature of 98 degrees Celsius by differential thermal analysis and 10 weight part of calcium carbonate powder having average particle diameter of 3 µm were mixed, and the mixture thereof was obtained. The films (25 µm) were formed. Low density polyethylene film (15 µm) having density: 0.915 g /cm³ and MFI: 8 g/10 minute, Kraft paper (weight: 220g/m²), the low density polyethylene film and mLLDPE film including calcium carbonate powder heat-glued together in the order, and packaging materials of this invention were produced.

### (Example 2)

Same as Example 1, a mixture was obtained except that 90 parts by weight of mLLDPE used with Example 1 and kaolinite 10 parts by weight having average particle diameter of 100nm were used. A film (25 µm) was formed. The low density polyethylene film used with Example 1, the Kraft paper, the low density polyethylene film used with Example 1, aluminum foll (15 µm), a modified polyolefin adhesive layer (15 µm) grafted to polypropylene with maleic anhydride and a mLLDPE film including super fine kaolinite were heat- glued together in the order, and packaging materials of this invention were produced.

### (Example 3)

Same as Example 1, a mixture was obtained except that synthetic zeolite (made by Toyo Soda Mfg. company, Brand name: TSZ500) having average particle diameter of 5 µm was used instead of kaolinite. A film (25 µm) thereof was formed. Same as Example 1, the packaging materials of this invention were produced except that the mLLDPE film including synthetic zeolite powder was used instead of the mLLDPE film including calcium carbonate powder used with Example 1.

### (Reference example)

Same as Example 1, packaging materials were produced except that film (25 µm) of mLLDPE used with Example 1 was used instead of the film comprising of mixtures of calcium carbonate powder and mLLDPE formed with Example 1. Packaging materials produced in Examples 1-3 and Reference example were used, and a brick type liquid food container containing 200ml was made. This container was filled up with water, and was sealed. About the container, physical property was evaluated with the following point, and the result thereof was shown for table 1.

### (Container Intensity)

Test for container break by twice free-fall (in the standing potion) to a stainless steel plate from height of 1.5m of the water-filled containers. 10 containers for each were examined.

### (Sealability)

The seal portions of the top and a bottom of the containers were cut off. Delamination strength was measured while pulling the seal portions to 180 degrees direction at speed of 300m/min. The figures of the following Table 1 are average about each five containers.

### (Openability)

In accordance with JIS Z7128.

**(Table 1)**

| | Example | | | Reference example |
|---|---|---|---|---|
| | 1 | 2 | 3 | |
| Container intensity ) numbers of containers | 0/10 | 0/10 | 0/10 | 0/10 |
| Sealability (N/15mm) | 21.6 | 20.6 | 21.6 | 22.5 |
| Openability (N) | 2.4 | 2.5 | 2.7 | 3.8 |

From a result of table 1, compared with the container produced from the conventional packaging materials in Reference example, the container made from the packaging materials of this invention are superior in the openability. The container of this invention shows superior strength and sealability equal to ones of the container made from the conventional packaging material in Reference example.

### Advantage

By this invention, the following effect is shown so that It was demonstrated by the Examples. A container made from packaging materials of this invention shows good container characteristic about strength and sealability, and the easily openable effect is shown.

### Industrial Applicability

The packaging material of this invention can be used to pack liquid food of milk, juice, refined sake, shochu, mineral water and other drink.

## Claims

1. A packaging material comprising of an Innermost layer of the packaging material comprising of laminates including a core material of paper or polyolefin Including inorganic filler comprising linear low-density polyethylene produced by using metallocene catalyst and fine inorganic filler.

2. A packaging material as claimed in Claim 1, wherein the fine inorganic filler comprise one or more filler chosen from calcium carbonate, clay and zeolite.

3. A packaging material as claimed in Claim 1, wherein the clay is chosen among kaolinite, montmorillonite and mica.

4. A packaging material as claimed in Claim 1, wherein the fine inorganic filler is fine phyllosilicate dispersing In the polyethylene uniformly.

5. A packaging material as claimed in Claim 1, wherein phyllosilicate 0.1-10 % by weight having average particle diameter in a range of 1-80 micron and no particle size of more than 300 micron is contained in the polyethylene, the phyllosilicate is substantially dispersed uniformly in the interlayer distance of 50 Angstrom or more.
